# EUROPEAN PATENT APPLICATION

(11) **EP 4 597 593 A1**
(43) Date of publication of application: **06.08.2025**
(21) Application number: 23871337.4
(22) Date of filing: 26.06.2023
(51) Int. Cl.: H01M 4/04, H01M 4/139

(54) **MANUFACTURING DEVICE FOR MIXTURE SHEET**

(30) Priority: 26.09.2022 JP 2022152307
(71) Applicant: Panasonic Intellectual Property Management Co., Ltd., Kadoma-shi, Osaka 571-0057 (JP)
(72) Inventor: MAEDA, Satoru, Kadoma-shi, Osaka 571-0057 (JP); TOMITA, Yosuke, Kadoma-shi, Osaka 571-0057 (JP); TAKAYAMA, Yosuke, Kadoma-shi, Osaka 571-0057 (JP); TSURUTA, Yuki, Kadoma-shi, Osaka 571-0057 (JP); KUROMIYA, Takao, Kadoma-shi, Osaka 571-0057 (JP)
(74) Representative: Eisenführ Speiser
(86) International application number: PCT/JP2023/023566
(87) International publication number: WO 2024/070092

(57) **Abstract**

This manufacturing device 1 for a mixture sheet S comprises: a first forming roller 4 and a second forming roller 6 that press a particulate dry-type electrode mixture P into a sheet form, thereby forming the mixture sheet S, the second roller 6 supporting and conveying the mixture sheet S on a circumferential surface 6b; and a first stretching roller 8 that stretches the mixture sheet S, the first stretching roller 8 being disposed so that a gap G1 between the first stretching roller 8 and the second forming roller 6 becomes smaller than the thickness T1 of the mixture sheet S that is supported by the second forming roller 6. The positional relationship between the first forming roller 4, the second forming roller 6, and the first stretching roller 8 is determined so that the rollers extend in a direction in which a first virtual line L1 and a second virtual line L2 intersect, the first virtual line L1 passing through a rotational axis 4a of the first forming roller 4 and a rotational axis 6a of the second forming roller 6, and the second virtual line L2 passing through the rotational axis 6a of the second forming roller 6 and a rotational axis 8a of the first stretching roller 8.

## Description

### TECHNICAL FIELD

The present disclosure relates to a manufacturing apparatus for manufacturing a compound sheet.

### BACKGROUND ART

Patent Literature 1 describes a multi-role system used to manufacture dry electrodes. This system is equipped with a plurality of rolls arranged in a row, supplies a dry electrode compound from a powder hopper to a gap between a pair of rolls to form a compound sheet, and stretches compound sheet thus molded by supporting the sheet on the circumferential surface of each roll.

### RELATED-ART LITERATURE

### PATENT LITERATURE

Patent Literature 1: US2020/0227722

### SUMMARY OF INVENTION

### TECHNICAL PROBLEM

We have made an extensive study on manufacturing apparatuses for manufacturing compound sheets and have come to recognize that there is room for improvement in conventional apparatuses to improve the quality of compound sheets.

The present disclosure addresses the issue described above, and a purpose thereof is to provide a technology for improving the quality of compound sheets.

### SOLUTION TO PROBLEM

An embodiment of the present disclosure relates to a manufacturing apparatus for manufacturing a compound sheet. The apparatus includes: a first molding roll and a second molding roll adjacent to each other at a predetermined interval, the first molding roll and the second molding roll compressing a particulate dry electrode compound supplied to a gap between the first molding roll and the second molding roll into a compound sheet, and the second molding roll supporting and conveying the compound sheet on a circumferential surface of the second molding roll; and a first stretching roll arranged such that an interval to the second molding roll is smaller than a thickness of the compound sheet supported on the circumferential surface of the second molding roll to stretch the compound sheet passing through a gap to the second molding roll. Relative positions of the first molding roll, the second molding roll, and the first stretching roll are defined such that an imaginary line passing through a rotation axis of the first molding roll and a rotation axis of the second molding roll and an imaginary line passing through a rotation axis of the second molding roll and a rotation axis of the first stretching roll extend in directions in which the imaginary lines intersect each other.

Another embodiment of the present disclosure relates to a manufacturing apparatus for manufacturing a compound sheet. The apparatus includes: a third stretching roll and a fourth stretching roll adjacent to each other at a predetermined interval, the third stretching roll and the fourth stretching roll causing a compound sheet composed of a particulate dry electrode compound to pass through and to be stretched between the third stretching roll and the fourth stretching roll, and the fourth stretching roll supporting and conveying the compound sheet on a circumferential surface of the fourth stretching roll; and a fifth stretching roll arranged such that an interval to the fourth stretching roll is smaller than a thickness of the compound sheet supported on the circumferential surface of the fourth stretching roll to stretch the compound sheet passing through a gap to the fourth stretching roll. Relative positions of the third stretching roll, the fourth stretching roll, and the fifth stretching roll are defined such that an imaginary line passing through a rotation axis of the third stretching roll and a rotation axis of the fourth stretching roll and an imaginary line passing through a rotation axis of the fourth stretching roll and a rotation axis of the fifth stretching roll extend in directions in which the imaginary lines intersect each other.

Optional combinations of the aforementioned constituting elements, and implementations of the present disclosure in the form of methods, apparatuses, and systems may also be practiced as additional modes of the present disclosure.

### ADVANTAGEOUS EFFECTS OF INVENTION

According to the present disclosure, it is possible to improve the quality of compound sheets.

### BRIEF DESCRIPTION OF DRAWINGS

[Fig. 1] Fig. 1 is a schematic diagram of a manufacturing apparatus according to embodiment 1 for manufacturing a compound sheet.
[Fig. 2] Fig. 2 is a schematic diagram of the manufacturing apparatus according to embodiment 2 for manufacturing a compound sheet.
[Fig. 3] Fig. 3A is a schematic diagram of the manufacturing apparatus according to variation 1 for manufacturing the compound sheet.

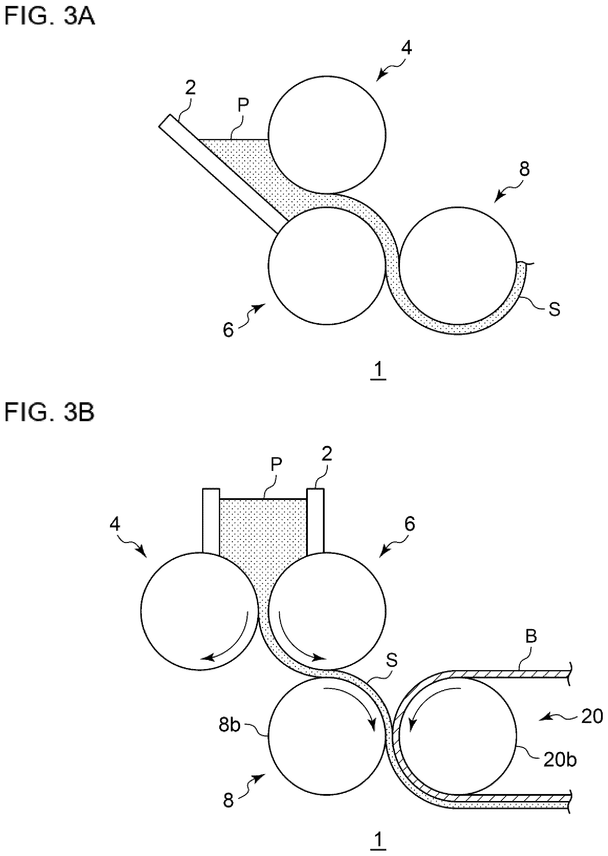

[Fig. 3] Fig. 3B is a schematic diagram of the manufacturing apparatus according to variation 2 for manufacturing the compound sheet.

### DESCRIPTION OF EMBODIMENTS

Hereinafter, the present disclosure will be described based on preferred embodiments with reference to the accompanying drawings. The embodiments are not intended to limit the scope of the present disclosure but exemplify the present disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

### (Embodiment 1)

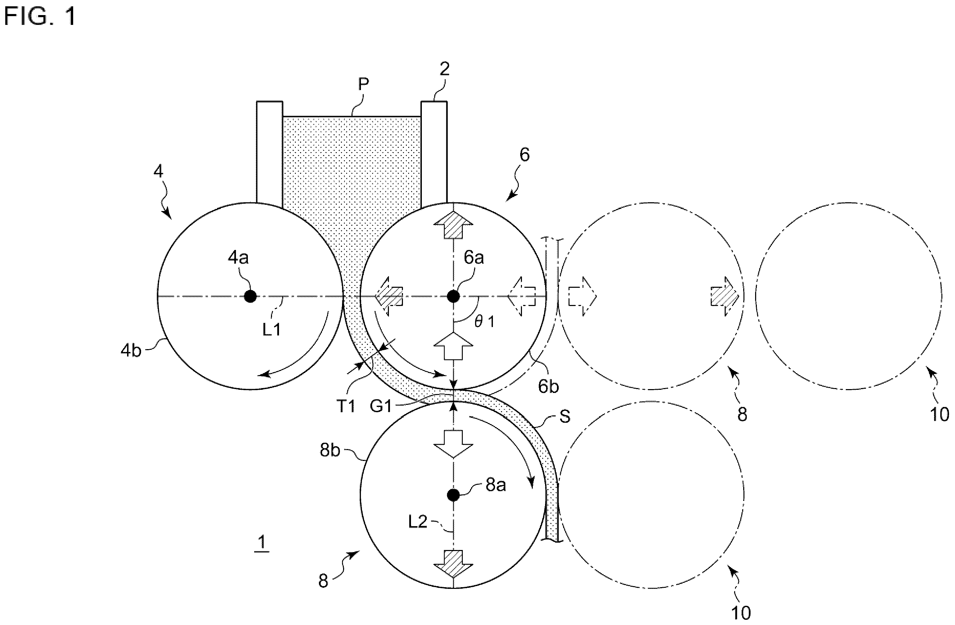

Fig. 1 is a schematic diagram of a manufacturing apparatus 1 according to embodiment 1 for manufacturing a compound sheet S. The manufacturing apparatus 1 for manufacturing the compound sheet S includes a reservoir 2, a first molding roll 4, a second molding roll 6, and a first stretching roll 8. The reservoir 2 has, for example, a known structure such as a combination of a hopper and a feeder and stores a particulate (powdery) dry electrode compound P that serves as a raw material for the compound sheet S. The average particle size of the dry electrode compound P is, for example, 5 µm or more and 50 µm or less. In this disclosure, the average particle size means a particle size at 50% of the integrated value in the particle size distribution determined by the laser diffraction/scattering method.

The dry electrode compound P includes an electrode active material and, if necessary, a conductive agent, a binder, and a solvent. In the case of a general lithium ion secondary battery, the electrode active material is lithium cobalt oxide, lithium iron phosphate, etc. in the case of a positive electrode and is graphite etc. in the case of a negative electrode. The conductive agent is graphite, carbon black, acetylene black, etc. The binder is polytetrafluoroethylene (PTFE), polyvinylidene fluoride (PVdF), etc. In the case the dry electrode compound P is used for the negative electrode, the solvent is exemplified by water; alcohols such as ethanol; N-methylpyrrolidone (NMP); toluene; dimethyl carbonate (DMC), ethyl methylcarbonate (EMC), etc. In the case the dry electrode compound P is used for the positive electrode, the solvent is exemplified by amine-based solvent such as N, N-dimethylaminopropylamine, diethylenetriamine, etc.; ether-based solvent such as tetrahydrofuran; ketone-based solvent such as methyl ethyl ketone; ester-based solvent such as methyl acetate; amide solvent such as dimethylacetamide and N-methyl-2-pyrrolidone, etc. The total of the binder content and the solvent content of the dry electrode compound P is 10% by mass or less, or 5% by mass or less, or 3% by mass or less, or 0.1% by mass, or substantially 0% with respect to the total mass of the dry electrode compound P. Therefore, a drying furnace for drying the compound sheet S can be omitted.

The first molding roll 4 and the second molding roll 6 are disposed at the powder outlet of the reservoir 2. The posture of the first molding roll 4 and the second molding roll 6 is defined such that the respective rotation axes 4a and 6a are parallel to each other, and the first molding roll 4 and the second molding roll 6 are adjacent to each other at a predetermined interval. The second molding roll 6 is disposed further downstream in the conveying direction of the compound sheet S than the first molding roll 4. The dry electrode compound P is supplied from the reservoir 2 to the gap between the first molding roll 4 and the second molding roll 6. The first molding roll 4 and the second molding roll 6 by way of example also function as feed rolls of the feeder and supply the dry electrode compound P in the reservoir 2 to the gap between the two molding rolls, placing the dry electrode compound P on a circumferential surface 4b of the first molding roll 4 and a circumferential surface 6b of the second molding roll 6.

The first molding roll 4 and the second molding roll 6 rotate in mutually opposite directions to compress the dry electrode compound P supplied to the gap into a sheet. Thereby, the compound sheet S is formed. The compound sheet S is continuously fed from the gap between the first molding roll 4 and the second molding roll 6. Therefore, the compound sheet S is a strip elongated in the conveying direction. The compound sheet S is conveyed downstream while being supported on the circumferential surface 6b of the second molding roll 6.

The first stretching roll 8 is disposed further downstream in the conveying direction of the compound sheet S than the second molding roll 6. The posture of the first stretching roll 8 is defined such that a rotation axis 8a is parallel to the rotation axis 6a of the second molding roll 6, and the first stretching roll 8 is adjacent to the second molding roll 6 at a predetermined interval. The second molding roll 6 and the first stretching roll 8 can feed the compound sheet S to the downstream side by rotating in mutually opposite directions, sandwiching the compound sheet S in between. The compound sheet S supported on the circumferential surface 6b of the second molding roll 6 passes through the gap between the second molding roll 6 and the first stretching roll 8 and is delivered to a circumferential surface 8b of the first stretching roll 8. The compound sheet S is then supported on the circumferential surface 8b and conveyed to the downstream side. The compound sheet S being conveyed is always maintained in contact with the circumferential surface 6b of the second molding roll 6 and the circumferential surface 8b of the first stretching roll 8.

The first stretching roll 8 is arranged such that an interval G1 (gap dimension) to the second molding roll 6 is smaller than a thickness T1 of the compound sheet S supported on the circumferential surface 6b of the second molding roll 6. Therefore, the compound sheet S is stretched in the process of passing through the gap between the second molding roll 6 and the first stretching roll 8. It can be interpreted that the second molding roll 6 also functions as a stretching roll in the configuration. The thickness T1 of the compound sheet S supported on the circumferential surface 6b, i.e. the thickness of the compound sheet S located on the downstream side of the gap between the two molding rolls and on the upstream side of the gap between the second molding roll 6 and the first stretching roll 8 is, for example, 300 µm or more. In the case the thickness of the compound sheet S is 300 µm or more, the displacement of both rolls described later could easily occur when the compound sheet S passes through the gap between the second molding roll 6 and the first stretching roll 8.

It should be noted that the manufacturing apparatus 1 may have one or more further stretching rolls on the downstream side of the first stretching roll 8. It is also possible to further stretch the compound sheet S according to the rotational speed difference between the first stretching roll 8 and the second molding roll 6. By way of example, the compound sheet S is stretched to a target thickness and then layered on a current collector plate (not shown). The compound sheet S is then turned into individual pieces of electrode plates, which are used in a power storage apparatus such as a secondary battery and a capacitor. The target thickness of the compound sheet S is, for example, 200 µm or less.

As described above, the interval G1 between the second molding roll 6 and the first stretching roll 8 is smaller than the thickness T1 of the compound sheet S entering the gap between the two rolls. Therefore, a force is applied to the two rolls in the direction of separating the two rolls from each other when the compound sheet S passes through the gap between the second molding roll 6 and the first stretching roll 8. Thereby, the second molding roll 6 and the first stretching roll 8 could be displaced in a direction away from each other slightly.

In the case the first molding roll 4, the second molding roll 6, and the first stretching roll 8 are arranged on the same line in this order as shown by an imaginary line in Fig. 1, displacement the second molding roll 6 and the first stretching roll 8 in a direction away from each other results in the second molding roll 6 moving closer to the first molding roll 4. As a result, the gap between the first molding roll 4 and the second molding roll 6 is narrowed so that the thickness of the compound sheet S to be molded could be uneven. Further, excessive narrowing of the gap could break the compound sheet S. This could cause deterioration in the quality of the compound sheet S as a result.

Further, when the second stretching roll 10 is arranged on the same line as the other rolls on the downstream side of the first stretching roll 8, displacement of the second molding roll 6 and the first stretching roll 8 in a direction away from each other results in the first stretching roll 8 moving closer to the second stretching roll 10. As a result, the gap between the first stretching roll 8 and the second stretching roll 10 is narrowed so that the thickness of the compound sheet S could be uneven. Further, the compound sheet S will be excessively rolled so that the compound sheet S could break. This could cause deterioration in the quality of the compound sheet S as a result.

The compound sheet S is composed of a dry electrode compound P. The dry electrode compound P has a lower content of solvent and binder than a wet electrode compound. In addition, the dry electrode compound P may contain a hard metal oxide. Further, the compound sheet S is extremely thin and has a target thickness of 200 µm or less. Therefore, the compound sheet S is not easily elastically deformed even when it is subjected to an external force. Therefore, displacement of the second molding roll 6 and the first stretching roll 8 greatly affects the thickness of the compound sheet S and could easily make the thickness uneven or break the sheet.

On the other hand, the arrangement of the first molding roll 4, the second molding roll 6, and the first stretching roll 8 is defined as follows in the manufacturing apparatus 1 of this embodiment. That is, the relative positions of these three rolls are defined such that an imaginary line L1 passing through the rotation axis 4a of the first molding roll 4 and the rotation axis 6a of the second molding roll 6 and an imaginary line L2 passing through the rotation axis 6a of the second molding roll 6 and the rotation axis 8a of the first stretching roll 8 extend in directions in which the lines intersect each other.

Thereby, the direction in which the second molding roll 6 is displaced can be shifted from the direction approaching the first molding roll 4. Therefore, it is possible to suppress the narrowing of the gap between the first molding roll 4 and the second molding roll 6 due to the displacement of the second molding roll 6. Accordingly, it is possible to suppress uneven thickness of the compound sheet S and break of the compound sheet S, thereby improving the quality of the compound sheet S. Further, in the case the first stretching roll 8 and the second stretching roll 10 are arranged parallel to the imaginary line L1, for example, the direction in which the first stretching roll 8 is displaced can be shifted from the direction approaching the second stretching roll 10. Therefore, it is possible to suppress the narrowing of the gap between the first stretching roll 8 and the second stretching roll 10 by the displacement of the first stretching roll 8. Accordingly, it is possible to suppress uneven thickness of the compound sheet S and break of the compound sheet S, thereby improving the quality of the compound sheet S. The diameters of the first stretching roll 8 and the second stretching roll 10 may be the same or different.

Given that the angle θ1 formed by the imaginary line L1 and the imaginary line L2 when the first molding roll 4, the second molding roll 6, and the first stretching roll 8 are arranged on the same line in this order is 0°, the angle θ1 formed by the two imaginary lines L1, L2 is preferably 45° or more. Thereby, it is possible to further suppress the narrowing of the gap between the two molding rolls and the gap between the two stretching rolls. More preferably, the angle θ1 formed by the two imaginary lines L1 and L2 is 90°. This can further suppress the narrowing of the gap between the two molding rolls and the gap between the two stretching rolls. The upper limit of the angle θ1 is determined at a value at which the first molding roll 4 and the first stretching roll 8 do not interfere.

### (Embodiment 2)

The manufacturing apparatus 1 according to this embodiment has a configuration common to that of embodiment 1 except that the two molding rolls and the one stretching roll in embodiment 1 are replaced by three stretching rolls. Hereinafter, the manufacturing apparatus 1 according to this embodiment will be described, highlighting the configuration different from that of embodiment 1. The common configuration will be briefly described, or a description thereof will be omitted.

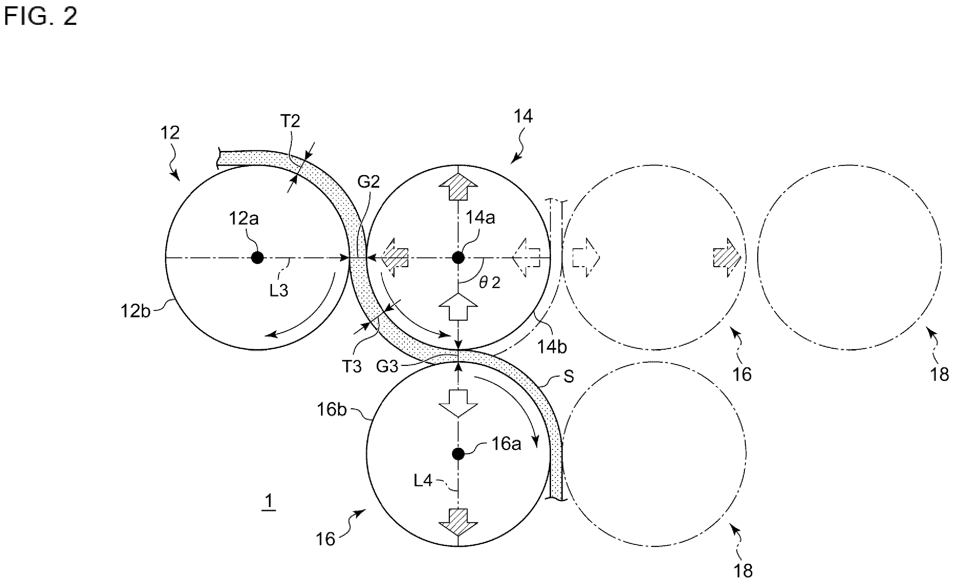

Fig. 2 is a schematic diagram of the manufacturing apparatus 1 according to embodiment 2 for manufacturing a compound sheet S. The manufacturing apparatus 1 for manufacturing the compound sheet S includes a third stretching roll 12, a fourth stretching roll 14, and a fifth stretching roll 16. The posture of the third stretching roll 12 and the fourth stretching roll 14 is defined such that the respective rotation axes 12a and 14a are parallel to each other, and the third stretching roll 12 and the fourth stretching roll 14 are adjacent to each other at a predetermined interval. The fourth stretching roll 14 is disposed further downstream in the conveying direction of the compound sheet S than the third stretching roll 12. The compound sheet S composed of a particulate dry electrode compound P is supplied to the gap between the third stretching roll 12 and the fourth stretching roll 14. The compound sheet S is, for example, molded in the same method as that of embodiment 1.

The third stretching roll 12 and the fourth stretching roll 14 rotate in mutually opposite directions to convey the compound sheet S supplied to the gap to the downstream side. The compound sheet S is conveyed to the downstream side while being supported on the circumferential surface 14b of the fourth stretching roll 14. The third stretching roll 12 and the fourth stretching roll 14 are arranged such that an interval G2 between the two rolls is smaller than a thickness T2 of the compound sheet S supplied to the gap between the two rolls. Therefore, the compound sheet S is stretched in the process of passing through the gap between the third stretching roll 12 and the fourth stretching roll 14.

The fifth stretching roll 16 is disposed further downstream in the conveying direction of the compound sheet S than the fourth stretching roll 14. The posture of the fifth stretching roll 16 is defined such that a rotation axis 16a is parallel to the rotation axis 14a of the fourth stretching roll 14, and the fifth stretching roll 16 is adjacent to the fourth stretching roll 14 at a predetermined interval. The fourth stretching roll 14 and the fifth stretching roll 16 convey the compound sheet S to the downstream side by rotating in mutually opposite directions, sandwiching the compound sheet S in between. The compound sheet S supported on a circumferential surface 14b of the fourth stretching roll 14 passes through the gap between the fourth stretching roll 14 and the fifth stretching roll 16 and is delivered to a circumferential surface 16b of the fifth stretching roll 16. The compound sheet S is then supported on the circumferential surface 16b and conveyed to the downstream side. The compound sheet S being conveyed is always maintained in contact with the circumferential surface 14b of the fourth stretching roll 14 and the circumferential surface 16b of the fifth stretching roll 16. In this embodiment, the compound sheet S is also supported on the circumferential surface 12b of the third stretching roll 12.

The fifth stretching roll 16 is arranged such that an interval G3 to the fourth stretching roll 14 is smaller than a thickness T3 of the compound sheet S supported on the circumferential surface 14b of the fourth stretching roll 14. Therefore, the compound sheet S is stretched in the process of passing through the gap between the fourth stretching roll 14 and the fifth stretching roll 16.

The manufacturing apparatus 1 may have one or more additional stretching rolls further downstream than the fifth stretching roll 16. **It** is also possible to further stretch the compound sheet S according to the rotational speed difference between the fifth stretching roll 16 and the fourth stretching roll 14. Further, the compound sheet S may be stretched by the third stretching roll 12 and the fourth stretching roll 14 only according to the rotational speed difference between the two rolls.

As described above, the interval G3 between the fourth stretching roll 14 and the fifth stretching roll 16 is smaller than the thickness T3 of the compound sheet S entering the gap between the two rolls. Therefore, a force is applied to the two rolls in the direction of separating the two rolls from each other when the compound sheet S passes through the gap between the fourth stretching roll 14 and the fifth stretching roll 16. Thereby, the fourth stretching roll 14 and the fifth stretching roll 16 could be displaced in a direction away from each other slightly.

In the case the third stretching roll 12-the fifth stretching roll 16 are arranged on the same straight line in this order as shown by the imaginary line in Fig. 2,. displacement of the fourth stretching roll 14 and the fifth stretching roll 16 in a direction away from each other results in the fourth stretching roll 14 moving closer to the third stretching roll 12. As a result, the gap between the third stretching roll 12 and the fourth stretching roll 14 is narrowed so that the thickness of the compound sheet S could be uneven, or the compound sheet S could break. This could cause deterioration in the quality of the compound sheet S as a result.

Further, in the case the sixth stretching roll 18 is arranged on the same line as the other rolls on the downstream side of the fifth stretching roll 16, displacement of the fourth stretching roll 14 and the fifth stretching roll 16 in a direction away from each other results in the fifth stretching roll 16 moving closer to the sixth stretching roll 18. As a result, the gap between the fifth stretching roll 16 and the sixth stretching roll 18 is narrowed so that the thickness of the compound sheet S could be uneven, or the compound sheet S could break. This could cause deterioration in the quality of the compound sheet S as a result.

This is addressed in the manufacturing apparatus 1 of this embodiment by defining the arrangement of the third stretching roll 12, the fourth stretching roll 14, and the fifth stretching roll 16 as follows. That is, the relative positions of the three rolls are defined such that an imaginary line L3 passing through the rotation axis 12a of the third stretching roll 12 and the rotation axis 14a of the fourth stretching roll 14 and an imaginary line L4 passing through the rotation axis 14a of the fourth stretching roll 14 and the rotation axis 16a of the fifth stretching roll 16 extend in directions that in which lines intersect each other.

Thereby, it is possible to suppress the narrowing of the gap between the third stretching roll 12 and the fourth stretching roll 14 by the displacement of the fourth stretching roll 14. Accordingly, it is possible to suppress uneven thickness of the compound sheet S and break of the compound sheet S, thereby improving the quality of the compound sheet S. Further, in the case the fifth stretching roll 16 and the sixth stretching roll 18 are arranged parallel to the imaginary line L3, for example, it is possible to suppress the narrowing of the gap between the fifth stretching roll 16 and the sixth stretching roll 18 due to the displacement of the fifth stretching roll 16. Accordingly, it is possible to suppress uneven thickness of the compound sheet S and break of the compound sheet S, thereby improving the quality of the compound sheet S. The diameters of the third stretching roll 12-the sixth stretching roll 18 may be the same or different.

Given that the angle θ2 formed by the imaginary line L3 and the imaginary line L4 when the third stretching roll 12, the fourth stretching roll 14, and the fifth stretching roll 16 are arranged on the same line in this order is 0°, the angle θ2 formed by the two imaginary lines L3, L4 is preferably 45° or more and, more preferably, 90°, as in the case of embodiment 1. The upper limit of the angle θ2 is determined at a value at which the third stretching roll 12 and the fifth stretching roll 16 do not interfere.

Embodiments of the present disclosure have been described above in detail. The embodiments described above are merely specific examples of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiments by using phrases such as "of this embodiment" and "in this embodiment", details not referred to as such are also subject to design modification. Any combination of constituting elements included in the embodiment is also useful as an embodiment of the present disclosure. Hatching in the cross section in the drawings should not be construed as limiting the material of the hatched object.

### (Variation 1)

Fig. 3A is a schematic diagram of the manufacturing apparatus 1 according to variation 1 for manufacturing the compound sheet S. In the manufacturing apparatus 1 according to embodiment 1, the reservoir 2 supplies the dry electrode compound P from vertically above to the gap between the first molding roll 4 and the second molding roll 6. However, the direction of supply of the dry electrode compound P is not limited to that of the embodiment. As in the manufacturing apparatus 1 according to variation 1, for example, the first molding roll 4 and the second molding roll 6 may be arranged one above the other, and the reservoir 2 may supply the dry electrode compound P to the gap between the two molding rolls in the horizontal direction.

### (Variation 2)

Fig. 3B is a schematic diagram of the manufacturing apparatus 1 according to variation 2 for manufacturing the compound sheet S. The manufacturing apparatus 1 according to variation 2 is configured such that a laminating mechanism is provided in the manufacturing apparatus 1 according to each embodiment. Hereinafter, a case where a laminating mechanism is provided in the manufacturing apparatus 1 according to embodiment 1 will be described by way of example. That is, the manufacturing apparatus 1 includes a lamiroll 20 adjacent to the first stretching roll 8 at a predetermined interval. The lamiroll 20 conveys a substrate B such as a current collector plate, supporting the substrate B on a circumferential surface 20b. Examples of the substrate B include metal foils such as aluminum foil and copper foil.

The substrate B supported on the circumferential surface 20b of the lamiroll 20 and the compound sheet S supported on the circumferential surface 8b of the first stretching roll 8 are both supplied to the gap between the first stretching roll 8 and the lamiroll 20. The compound sheet S and the substrate B are then pressed against each other by the two rolls. Thereby, the compound sheet S is laminated on the substrate B, and a continuum of the electrode plate is obtained. Preferably, the lamiroll 20 is arranged such that the imaginary line L2 and the imaginary line passing through the rotation axis 8a of the first stretching roll 8 and the rotation axis of the lamiroll 20 extend in directions in which the lines intersect each other.

The embodiments may be defined by the following items.
[Item 1] A manufacturing apparatus (1) for manufacturing a compound sheet (S), including: a first molding roll (4) and a second molding roll (6) adjacent to each other at a predetermined interval, the first molding roll (4) and the second molding roll (6)compressing a particulate dry electrode compound (P) supplied to a gap between the first molding roll (4) and the second molding roll (6) into a compound sheet (S), and the second molding roll (6) supporting and conveying the compound sheet (S) on a circumferential surface (6b) of the second molding roll (6); and
   a first stretching roll (8) arranged such that an interval (G1) to the second molding roll (6) is smaller than a thickness (T1) of the compound sheet (S) supported on the circumferential surface (6b) of the second molding roll (6) to stretch the compound sheet (S) passing through a gap to the second molding roll (6),
   wherein relative positions of the first molding roll (4), the second molding roll (6), and the first stretching roll (8) are defined such that an imaginary line (L1) passing through a rotation axis (4a) of the first molding roll (4) and a rotation axis (6b) of the second molding roll (6) and an imaginary line (L2) passing through a rotation axis (6a) of the second molding roll (6) and a rotation axis (8a) of the first stretching roll (8) extend in directions in which the imaginary lines intersect each other.
[Item 2] A manufacturing apparatus (1) for manufacturing a compound sheet (S), including:
   a third stretching roll (12) and a fourth stretching roll (14) adjacent to each other at a predetermined interval, the third stretching roll (12) and the fourth stretching roll (14) causing a compound sheet (S) composed of a particulate dry electrode compound (P) to pass through and to be stretched between the third stretching roll (12) and the fourth stretching roll (14), and the fourth stretching roll (14) supporting and conveying the compound sheet (S) on a circumferential surface (14b) of the fourth stretching roll (14); and
   a fifth stretching roll (16) arranged such that an interval (G3) to the fourth stretching roll (14) is smaller than a thickness (T3) of the compound sheet (S) supported on the circumferential surface (14b) of the fourth stretching roll (14) to stretch the compound sheet (S) passing through a gap to the fourth stretching roll (14),
   wherein relative positions of the third stretching roll (12), the fourth stretching roll (14), and the fifth stretching roll (16) are defined such that an imaginary line (L3)passing through a rotation axis (12a) of the third stretching roll (12) and a rotation axis (14a) of the fourth stretching roll (14) and an imaginary line (L4) passing through a rotation axis (14a) of the fourth stretching roll (14) and a rotation axis (16a) of the fifth stretching roll (16) extend in directions in which the imaginary lines intersect each other.
[Item 3] The manufacturing apparatus (1) according to Item 1 or Item 2,
   wherein an angle (θ1, θ2) formed by the two imaginary lines (L1, L2, L3, L4) is 45° or more.
[Item 4] The manufacturing apparatus (1) according to any one of Items 1 through Item 3, wherein
   an angle (θ1, θ2) formed by the two imaginary lines (L1, L2, L3, L4) is 90°.

### INDUSTRIAL APPLICABILITY

The present disclosure can be utilized in manufacturing apparatuses for manufacturing compound sheets.

### REFERENCE SIGNS LIST

1 manufacturing apparatus, 4 first molding roll, 4a, 6a, 8a, 12a, 14a, 16a rotation axis, 6 second molding roll, 6b, 8b, 14b, 16b circumferential surface, 8 first stretching roll, 12 third stretching roll, 14 fourth stretching roll, 16 fifth stretching roll, G1, G3 interval, L1, L2, L3, L4 imaginary line, P dry electrode compound, S compound sheet, T1, T3 thickness

## Claims

1. A manufacturing apparatus for manufacturing a compound sheet, comprising:
a first molding roll and a second molding roll adjacent to each other at a predetermined interval, the first molding roll and the second molding roll compressing a particulate dry electrode compound supplied to a gap between the first molding roll and the second molding roll into a compound sheet, and the second molding roll supporting and conveying the compound sheet on a circumferential surface of the second molding roll; and
a first stretching roll arranged such that an interval to the second molding roll is smaller than a thickness of the compound sheet supported on the circumferential surface of the second molding roll to stretch the compound sheet passing through a gap to the second molding roll,
wherein relative positions of the first molding roll, the second molding roll, and the first stretching roll are defined such that an imaginary line passing through a rotation axis of the first molding roll and a rotation axis of the second molding roll and an imaginary line passing through a rotation axis of the second molding roll and a rotation axis of the first stretching roll extend in directions in which the imaginary lines intersect each other.

2. A manufacturing apparatus for manufacturing a compound sheet, comprising:
a third stretching roll and a fourth stretching roll adjacent to each other at a predetermined interval, the third stretching roll and the fourth stretching roll causing a compound sheet composed of a particulate dry electrode compound to pass through and to be stretched between the third stretching roll and the fourth stretching roll, and the fourth stretching roll supporting and conveying the compound sheet on a circumferential surface of the fourth stretching roll; and
a fifth stretching roll arranged such that an interval to the fourth stretching roll is smaller than a thickness of the compound sheet supported on the circumferential surface of the fourth stretching roll to stretch the compound sheet passing through a gap to the fourth stretching roll,
wherein relative positions of the third stretching roll, the fourth stretching roll, and the fifth stretching roll are defined such that an imaginary line passing through a rotation axis of the third stretching roll and a rotation axis of the fourth stretching roll and an imaginary line passing through a rotation axis of the fourth stretching roll and a rotation axis of the fifth stretching roll extend in directions in which the imaginary lines intersect each other.

3. The manufacturing apparatus according to claim 1 or 2,
wherein an angle formed by the two imaginary lines is 45° or more.

4. The manufacturing apparatus according to claim 3,
wherein the angle formed by the two imaginary lines is 90°.
